# EUROPÄISCHE PATENTSCHRIFT

(11) **EP 2 066 992 B1**
(45) Veröffentlichungstag und Bekanntmachung des Hinweises auf die Patenterteilung: **29.08.2012**
(21) Anmeldenummer: 07818253.2
(22) Anmeldetag: 19.09.2007
(51) Int. Cl.: F28D 7/10, F28F 9/04, F28F 21/08, F02M 25/07

(54) **Abgaskühler**
Exhaust gas cooler
Refrodisseur de gaz d'échappement

(30) Priorität: 19.09.2006 DE 102006044630
(43) Veröffentlichungstag der Anmeldung: 10.06.2009
(73) Patentinhaber: Behr GmbH & Co. KG, 70469 Stuttgart (DE)
(72) Erfinder: GESKES, Peter, 73760 Ostfildern (DE); RUCKWIED, Jens, 70195 Stuttgart (DE); BARWIG, Jürgen, 71665 Stuttgart-Vaihingen (DE)
(74) Vertreter: Grauel, Andreas
(86) Internationale Anmeldenummer: PCT/EP2007/008158
(87) Internationale Veröffentlichungsnummer: WO 2008/034604

(56) Entgegenhaltungen:
- EP-A- 1 090 745
- EP-A- 1 101 638
- EP-A- 1 336 810
- EP-A- 1 788 333
- WO-A-2005/090890
- WO-A-2006/029430
- WO-A-2006/073134
- DE-A1-102004 003 325
- DE-U1-202006 017 038
- FR-A- 2 507 759
- FR-A- 2 545 594
- GB-A- 2 231 142
- US-A- 4 991 647
- US-A1- 2003 165 397
- US-B1- 6 391 129

## Beschreibung

Die Erfindung betrifft einen Abgaskühler zur Kühlung eines Abgases, aufweisend ein inneres Rohrteil mit zumindest einem Kanal und ein äußeres Rohrteil. Die Erfindung betrifft weiter ein Abgasrückführsystem für einen Verbrennungsmotor.

DE 20 2006 017 038 U1 Zeigt einen Kältemaschinen - Wärmetauscher mit einem innerem Rohr aus Aluminium und einem äußeren Rohr aus Kunststoff. Das innere Rohr weist Förtsätzen auf. Ein Steg ist an einem von beiden Rohr angeordnet. Dieses Dokument wird als nächstliegender Stand der Technik angesehen.

Für Verbrennungsmotoren, insbesondere von Kraftfahrzeugen, sind verschiedene Bauformen von Wärmetauschern, z.B. Gaskühler wie in FR 2 507 759, vorgeschlagen worden. Bekannt sind auch Abgaskühler zur Kühlung von rückgeführtem Abgas zur Schadstoffreduktion, bei denen Bündel aus separaten Flachrohren aus nicht rostendem Stahl endseitig in gemeinsamen Aufnahmestücken verschweißt sind, wobei die Aufnahmestücke wiederum randseitig mit einem Stahlgehäuse verschweißt sind. Ähnliche Bauprinzipien von Kühlern zur Kühlung eines Gases mittels einer Flüssigkeit sind auch für die Kühlung von verdichteter und erhitzter Ladeluft vorgeschlagen worden, wobei zur Kühlung von Ladeluft bisher vorrangig luftgekühlte Wärmetauscher verwendet werden.

Aus DE 103 49 887 A1 ist bekannt, dass ein Kühler für ein AbgasRückführsystem bei reduziertem Materialeinsatz und Montageaufwand eine Erhöhung der Wärmeübertragungs-Effektivität aufweist. Hierzu ist der Durchflusskanal für das zu kühlende Abgas als Kühlprofil ausgebildet, das hinsichtlich seines Querschnitts eine Profilform mit zu einer Kreisform vergrößerter Außenoberfläche aufweist, wobei das Kühlprofil von einem Außenrohr ummantelt ist, durch das das Kühlmedium, insbesondre Kühlwasser, strömt.

Aus DE 203 01 920 U1 ist ein Wärmeübertrager bekannt, mit einem mindestens zwei parallel zueinander verlaufende Strömungsspalte enthaltenden Block, die an ihren Enden durch zwei gegenüber der Umgebung abgedichtete Endstücke in unterschiedliche Strömungskanäle unterteilt sind, von denen jedes Endstück mit einem Kanalanschluss an die Zuführungs- und Ableitungen für das warme und das kalte Strömungsfluid versehen sind. Dabei besteht der Block aus einem im Strangpressverfahren hergestellten, einteiligen Wärmeübertragungselement aus einer Aluminiumlegierung mit stoffschlüssig verbundenen, wärmeübertragenden Wänden zwischen den im Querschnitt geschlossenen Strömungsspalten.

Aus DE 199 36 241 A1 ist eine Vorrichtung zur Kühlung von Gasen bekannt, bei der das Gas durch Kanäle einer Kühlvorrichtung führbar ist, wobei in der Kühlvorrichtung in Nachbarschaft zu den Kanälen für das Gas auch Kanäle für ein durchströmendes Kühlmedium vorhanden sind. Die Kühlvorrichtung weist zentral im Inneren die Kanäle für das Kühlmittel und radial außen die Kanäle für das zu kühlende Gas und ein stranggepresstes Aluminium-Profilteil als Zwischenstück mit Kühlrippen auf.

Aus DE 198 09 859 A1 ist eine Vorrichtung zur Kühlung von Gasen bekannt, bei der das Gas durch Kanäle einer Kühlvorrichtung führbar ist, wobei in der Kühlvorrichtung in Nachbarschaft zu den Kanälen für das Gas auch Kanäle für ein durchströmendes Kühlmedium vorhanden sind. Die Kühlvorrichtung weist zentral im Inneren der Kanäle für das Kühlmedium und radial außen die Kanäle für das zu kühlende Gas auf.

Es ist die Aufgabe der Erfindung, einen Wärmetauscher für einen Verbrennungsmotor anzugeben, der kostengünstig und mit einfachen Mitteln herstellbar ist.

Diese Aufgabe wird durch die einen Abgaskühler nach Anspruch 1 gelöst.

Durch den sich vom inneren zum äußeren oder vom äußeren zum inneren Rohrteil erstreckenden Steg ist eine unmittelbare Halterung der Rohrteile aneinander gegeben, so dass die Vervollständigung der Rohrteile zu einem Gaskühler z. B. mittels geeigneter Anschlusskappen für die Zuführung und Abführung von Gas und Kühlmittel kostengünstig und einfach realisierbar ist.

Die Erfindung führt auch auf eine Verwendung des Wärmetauschers für ein Kraftfahrzeug oder für ein Schienenfahrzeug oder für ein Kraftwerk, insbesondere ein Blockheizkraftwerk.

Das zu kühlende Fluid besteht zumindest teilweise aus Abgas des Verbrennungsmotors. Sowohl komprimierte Verbrennungsluft als auch zu kühlendes, z. B. rückgeführtes Abgas haben hohe Temperaturen und stellen ähnliche Anforderungen bezüglich Druckabfall und Massenstrom an einen Gaskühler. Falls das Gas Abgas des Verbrennungsmotors enthält, ist zudem die grundsätzliche Problematik der hohen Korrosivität des Abgases und seiner Kondensate zu berücksichtigen.

Weitere Weiterbildungen der Erfindung sind den Unteransprüchen zu entnehmen.

Im Interesse einer kostengünstigen Fertigung ist zumindest eines der beiden, inneres Rohrteil oder äußeres Rohrteil, als Strangpressprofil ausgebildet. Hierdurch sind vor allem komplexe Formgebungen zur Erhöhung einer Tauscherleistung auf einfache Weise ermöglicht, da Strangpressprofile weitgehend beliebige Querschnittsformen aufweisen können.

Das innere Rohrteil ist auf Basis von Aluminium bevorzugt als Stragpressprofil ausgebildet. Neben der kostengünstigen und einfachen Herstellbarkeit komplexer Formen mit diesem Material hat sich der überraschende Effekt gezeigt, dass auf übliche Weise hergestellte Strangpressprofile auf Basis von Aluminium bzw. gängigen Aluminiumlegierungen besonders geringe Anfälligkeit gegenüber der chemischen Aggressivität von heißem Abgas zeigen. Dieser Effekt könnte durch die besondere, beim Strangpressen und nachfolgendem Abkühlen entstehende Mikrostruktur des Materials bedingt sein. Es hat sich gezeigt, dass durch Erhitzen solcher korrosionsbeständiger Strangpressprofile auf hohe Temperaturen, z. B. im Rahmen eines Lötvorgangs oder Schweißvorgangs, die guten korrosiven Eigenschaften wieder verloren gehen können. Beim Einsatz der Vorrichtung ist daher darauf zu achten, dass nach dem Strangpressen keine entsprechend hohen Temperaturen mehr in das Material eingebracht werden oder allenfalls nur lokal eingebracht werden, z. B. beim lokalen Verschweißen einer Anschlusskappe zur Zuführung des Gasstroms.

Zur Verbesserung der Wärmetauscherleistung ist es vorgesehen, dass das innere Rohrteil eine Mehrzahl von rippenartigen Fortsätzen aufweist, die in den gasführenden Kanal hineinragen.

In einer bevorzugten Ausführungsform weist das innere Rohrteil zumindest einen zweiten Kanal auf, wobei der zweite Kanal als ein Bypasskanal mit verringerter Kühlung des durchströmenden Gases ausgebildet ist. Solche Bypasskanäle sind insbesondere bei Abgaskühlern üblich, um besonderen Betriebsbedingungen z. B. beim Kaltstart des Verbrennungsmotors Rechnung zu tragen. Bevorzugt weist der Bypasskanal eine Einlage, insbesondere aus einem Blechteil, auf. Hierdurch ist ein Wärmeverlust des Abgases beim Durchströmen des Bypasskanals weiter reduziert.

Zur Erzeugung von Turbulenzen und/oder längeren Strömungswegen und allgemein zur Verbesserung der Wärmetauscherleistung bei gegebenem Bauraum ist es vorteilhaft vorgesehen, das zumindest eines von beiden, inneres Rohrteil oder äußeres Rohrteil, über seinen Verlauf eine Verdrehung um eine Längsrichtung aufweist. Durch solche Verdrehungen z. B. des gasführenden inneren Rohrteils ist, insbesondere wenn rippenartige Fortsätze in den Kanal hineinragen, der Gasstrom mit einem Drall bzw. mit Turbulenzen beaufschlagbar. Hierdurch wird bei gegebener Kanallänge und gegebenem Massenstrom des Gases der Wärmeaustausch verbessert.

In besonders bevorzugter Ausführungsform ist es vorgesehen, dass das innere Rohrteil und das äußere Rohrteil über ihren Verlauf zumindest eine Biegung aufweisen. Solche in die Rohrteile eingebrachte Biegungen sind geeignet, den Gaskühler optimiert an den zur Verfügung stehenden Bauraum anzupassen. Gerade bei Verbrennungsmotoren von Kraftfahrzeugen ist der Bauraum sehr begrenzt und häufig von ungünstiger Form. Da das innere Rohrteil und das äußere Rohrteil über einen oder mehrere Stege miteinander in Verbindung stehen, können sie auf einfache Weise gemeinsam gebogen werden, um den Gaskühler an den Bauraum anzupassen.

Zur einfachen Festlegung von Anschlussstücken zur Zuführung und Abführung von Gas und Flüssigkeit weist das innere Rohrteil einen Überstand in einer Längsrichtung über das äußere Rohrteil auf.

In einer vorteilhaften Ausführungsform sind das innere Rohrteil und das äußere Rohrteil als separate Teile ausgeformt, wobei insbesondere ein Einschieben des inneren Rohrteils in das äußere Rohrteil durch den Steg zwangsgeführt ist. Hierdurch können die Rohrteile aus verschiedenen Materialien bestehen, wobei z. B. das mit dem heißen Gas in Berührung stehende innere Rohrteil ein besonders korrosionsbeständiges oder hochwertiges Material sein kann, wogegen das nur mit der Flüssigkeit in Berührung stehende äußere Rohrteil zur Kostenersparnis von geringerer Materialqualität sein kann. Zudem ist eine gemeinsame Biegung der ineinander geschobenen Rohrteile besonders einfach ermöglicht, da Stauchungen und Dehnungen im Bereich der Biegungen über die in Längsrichtung zueinander beweglichen Rohrteile besser ausgleichbar sind.

Gemäß der Erfindung ist das innere Rohrteil, auf Basis von Aluminium, insbesondere als Strangpressprofil, ausgebildet. Gemäß der Erfindung ist das äußere Rohrteil, auf Basis von Kunststoff ausgebildet. Vorzugsweise ist der Steg bis zu dem jeweils anderen der beiden, inneres Rohrteil oder äußeres Rohrteil, stoffschlüssig am inneren oder äußeren Rohrteil angeformt.

Nach der Erfindung ist das äußere Rohrteil als ein Kunststoffteil gebildet und das innere Rohrteil als ein Aluminium-Strangpressteil gebildet, an dem der sich zum äußeren Rohrteil erstreckende Steg stoffschlüssig direkt mitangeformt, d.h. im Rahmen des Strangpressvorgangs zusammen mit dem inneren Rohrteil gebildet ist. Die Erfindung hat sich als besonders vorteilhaft hinsichtlich einer Führung des Abgases im Innenraum des inneren Rohrteils und zur Führung des Kühlmittels im Zwischenraum zwischen dem äußeren Rohrteil und dem inneren Rohrteil erwiesen.

Als ergänzende Abstützung zwischen dem äußeren Rohrteil und dem inneren Rohrteil kann wenigstens ein oder eine Anzahl von weiteren separaten Abstandshaltern zwischen dem inneren und äußeren Rohrteil, zusätzlich zu den sich durchgehend zwischen dem inneren Rohrteil und dem äußeren Rohrteil erstreckenden Stegen, vorgesehen sein. Ein zusätzlicher Abstandshalter ist vorzugsweise aus Kunststoff gebildet. Ein zusätzlicher Abstandshalter ist vorzugsweise mit einem oder beiden der Rohrteile mittels einer Clipsverbindung oder einer Pressverbindung verbunden. Ebenso können Strömungsleitelemente oder Turbulenz erzeugende Elemente angeordnet sein und insbesondere mittels Clips- oder Pressverbindungen befestigt sein.

Grundsätzlich lässt sich die Anordnung von innerem und äußerem Rohrteil, u.a. wie zuvor erläutert, aus mindestens zwei strömungstechnisch getrennten Rohrteilen bilden, wobei gemäß dem Konzept der Erfindung an zumindest einem von beiden ein Steg angeordnet ist, der sich bis zu dem jeweils anderen der beiden erstreckt.

Die hydraulische Wirkung der Rohranordnung lässt sich vorzugsweise im Rahmen eines hydraulischen Durchmessers für eine durchströmte Querschnittsfläche definieren. Beispielsweise bildet der Zwischenraum zwischen dem äußeren Rohrteil und dem inneren Rohrteil - also insbesondere ein Ringquerschnitt oder ein Querschnitt eines Ringsegmentes - einen hydraulischen Durchmesser, der sich als Vierfaches der durchströmten Querschnittsfläche, dividiert durch den Umfang der durchströmten Querschnittsfläche, ergibt. Ebenso bildet der Innenraum des inneren Rohrteils einen hydraulischen Durchmesser, welcher sich als Vierfaches der durchströmten Querschnittsfläche, dividiert durch den Umfang der durchströmten Querschnittsfläche, ergibt.

Der hydraulische Durchmesser für denjenigen Querschnitt der Rohranordnung, welcher vom zu kühlenden Fluid durchsetzt ist, liegt vorzugsweise im Bereich zwischen 4 mm und 13 mm, insbesondere zwischen 7 mm und 10 mm. Der hydraulische Durchmesser für denjenigen Querschnitt der Rohranordnung, welcher vom Kühlmittel durchsetzt ist, liegt vorzugsweise im Bereich zwischen 3,5 mm und 15 mm. Insbesondere für den Fall, dass ein Kühlmittel im Zwischenraum zwischen dem inneren Rohrteil und dem äußeren Rohrteil geführt ist, hat sich ein hydraulischer Durchmesser - vorzugsweise für einen Querschnitt eines Ringsegmentes - zwischen 5 mm und 7 mm als besonders bevorzugt erwiesen. Ein hydraulischer Durchmesser zwischen 6,5 mm und 14 mm hat sich als besonders bevorzugt erwiesen für den Fall, dass das Kühlmittel im Innenraum des inneren Rohrteils - vorzugsweise für einen kreisförmige Querschnitt - geführt ist. Insgesamt hat es sich als besonders zweckmäßig erwiesen, dass ein gasführender Querschnitt, insbesondere Rohr, ein Vielfaches des hydraulischen Durchmessers eines Kühlmittel führenden Querschnitts, insbesondere Rohres, beträgt, insbesondere das 0,5- bis 4-fache, im Besonderen das 1- bis 2-fache, beträgt.

Darüber hinaus hat es sich als besonders bevorzugt erwiese, dass die Länge des Wärmetauschers, insbesondere inneren oder äußeren Rohrteils, ein Vielfaches des gasseitigen hydraulischen Durchmessers beträgt, insbesondere das 20- bis 200-fache, im Besonderen das 40- bis 100-fache.

Verwendung einer besonders korrosionsbeständigen Aluminiumlegierung zur Bildung der innere Rohrteile hat sich als besonders zweckmäßig erwiesen. Eine Aluminiumlegierung mit einer vergleichsweise guten Korrosionsfestigkeit weist einen vergleichsweise geringen Cu-Anteil auf, insbesondere einen Cu-Anteil, welcher geringer als 0,5 Gew.-%, insbesondere geringer als 0.2 Gew.-%, insbesondere geringer als 0,1 Gew.-% ist. Grundsätzlich eignet sich eine Al-Mg-Si-Legierung oder eine Al-Zn-Mg-Legierung. Als überraschend effektiv hat sich eine Aluminiumlegierung erwiesen, die zur Bildung zumindest eines der Rohrteile aufweist:
- einen Si-Anteil von weniger als 1.0 Gew.%;
- einen Fe-Anteil von weniger als 1.2 Gew.-%;
- einen Cu-Anteil von weniger als 0.5 Gew.-%;
- einen Cr-Anteil von weniger als 0.5 Gew.-%;
- einen Mg-Anteil von mehr als 0.02 Gew.
   und weniger als 0.5 Gew.-%;
- einen Zn-Anteil von weniger als 0.5 Gew.-%;
- einen Ti-Anteil von weniger als 0.5 Gew.%;
- Rest Al und unvermeidliche Verunreinigungen.

Insbesondere haben sich besonders vorteilhafte Eigenschaften der Legierung, insbesondere hinsichtlich der Korrosionsfestigkeit, herausgestellt für den Fall, dass die genannten Anteile konkreter gewählt werden.

Beispielsweise kann ein Si-Anteil unterhalb von 0.6 Gew-%, insbesondere unterhalb von 0.1 Gew.-% liegen. Ein Fe-Anteil kann insbesondere unterhalb von 0.7 Gew.-%, insbesondere unterhalb von 0.35 Gew.-% liegen. Darüber hinaus hat sich ein Cr-Anteil oberhalb von 0.05 Gew.-% und unterhalb von 0.2 Gew.-% als besonders bevorzugt erwiesen, insbesondere ein Cr-Anteil oberhalb von 0.1 Gew.-% und unterhalb von 0.2 Gew.-%. Ein Mg-Anteil liegt besonders vorteilhaft oberhalb von 0.05 Gew.-% und unterhalb von 0.3 Gew.-%. Darüber hinaus hat sich ein Zn-Anteil oberhalb von 0.05 Gew.-% und unterhalb von 0.3 Gew.-% als besonders bevorzugt erwiesen. Ein Ti-Anteil liegt bevorzugterweise oberhalb von 0.05 Gew.-% und unterhalb von 0.25 Gew.-%. Darüber hinaus kann die Aluminiumlegierung einen weiteren Anteil anderer Metalle und Substanzen aufweisen, beispielsweise Mn, Zr, Ni, V, Co, PP, Ga und O. Schließlich kann die Aluminiumlegierung auch einen beliebigen weiteren Anteil, beispielsweise ein Additiv od.dgl., im Bereich von 0.05 Gew.-% bis 0,15 Gew.-% aufweisen.

Zur weiteren Verbesserung einer Korrosionsfestigkeit hat es sich als besonders vorteilhaft erwiesen, eine in Strangpressrichtung gemessene durchschnittliche Korngröße vorzusehen, welche unterhalb von 200 µm, insbesondere unterhalb von 100 µm, insbesondere unterhalb von 50 µm liegt.

In einer ersten Variante weist das innere Rohrteil einen Innenraum zur Führung des zu kühlenden Fluids auf. Demgemäß ist der Zwischenraum zwischen dem äußeren Rohrteil und dem inneren Rohrteil zur Führung des Kühlmittels ausgebildet.

Gemäß der erfindung wird ein Gaskühler in ein Abgasrückführsystem für einen Verbrennungsmotor nach dem Anspruch 10

Nachfolgend werden zwei bevorzugte Ausführungsbeispiele eines erfindungsgemäßen Abgaskühlers beschrieben und anhand der anliegenden Zeichnungen näher erläutert.
- Fig. 1: zeigt eine schematische Schnittansicht einer ersten Ausführungsform eines Gaskühlers gemäß einer ersten Variante einer Weiterbildung in einer Längsrichtung;
- Fig. 2: zeigt eine räumliche teilweise Ansicht des Gaskühlers aus Fig. 1;
- Fig. 3: zeigt eine Querschnittsansicht des Gaskühlers aus Fig. 1 entlang der Linie A-A;
- Fig. 4: zeigt eine weitere teilweise räumliche Ansicht des Gaskühlers aus Fig. 1;
- Fig. 5: zeigt eine Querschnittsansicht eines zweiten Ausführungsbeispiels eines Gaskühlers gemäß einer ersten Variante einer Weiterbildung;
- Fig. 6A - Fig. 6B:: zeigt eine bevorzugte Ausführung eines Anschlussteils zur gemeinsamen Führung von Kühlmittel und Gas für eine Ausführungsform eines Gaskühlers gemäß einer ersten Variante einer Weiterbildung;
- Fig. 7A - Fig. 7E:: zeigt eine andere bevorzugte Ausführung eines Anschlussteils zur separaten Führung von Kühlmittel und Gas für eine Ausführungsform eines Gaskühlers gemäß einer ersten Variante einer Weiterbildung;

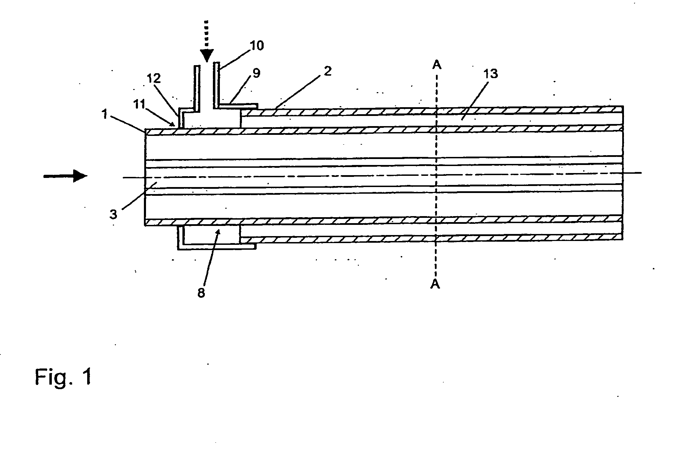

Der in Fig. 1 dargestellte Gaskühler umfasst ein inneres Rohrteil 1, das in ein äußeres Rohrteil 2 eingeschoben ist. Beide Rohrteile 1, 2 sind als Strangpressprofile auf Basis von Aluminium ausgebildet.

In dem inneren Rohrteil 1 ist ein Kanal 3 zur Führung von Abgas eines Verbrennungsmotors ausgebildet. Dabei wird das innere Rohrteil von einer im Wesentlichen zylindrischen Außenwandung 4 sowie einer Mehrzahl von insgesamt zehn von der Wandung 4 radial nach innen vorstehenden rippenartigen Fortsätzen 5 gebildet. Die Fortsätze 5 erstrecken sich über die gesamte Länge des inneren Rohrteils 1, so dass das innere Rohrteil 1 als prismatischer Körper ausgebildet ist.

Das äußere Rohrteil 2 umfasst eine zylindrische Außenwand 6, von der drei Stege 7 nach innen bis zu der Wandung 4 des inneren Rohrteils 1 vorstehen. Die drei Stege 7 sind symmetrisch in Winkeln von jeweils 120 Grad zueinander versetzt angeordnet. Ebenso wie die Fortsätze 5 des inneren Rohrteils 1 erstrecken sich die Stege 7 über die gesamte Länge, so dass auch das äußere Rohrteil 2 ein prismatischer Körper ist. Grundsätzlich können die Stege jedoch zur Materialeinsparung oder zur Verringerung der Reibung beim Einsetzen des inneren Rohrteils Unterbrechungen aufweisen. Gleiches gilt für die Fortsätze 5, bei denen geeignete Unterbrechungen in Längsrichtung einer Erzeugung von Turbulenzen im Gasstrom dienen können.

Das innere Rohrteil 1 weist einen Überstand 8 auf, um den es über das Ende äußeren Rohrteils 2 hinausragt. Hierdurch ist auf einfache Weise ein Anschlussglied 9 mit den Rohrteilen 1, 2 verbindbar (siehe Fig. 1). Das Anschlussglied 9 umfasst eine weitgehend rotationssymmetrische Metallkappe mit einem Anschluss 10 für Eintritt oder Austritt des flüssigen Kühlmittels. Das kappenförmige Anschlussglied 9 ist über das äußere Rohrteil 2 geschoben und umlaufend mit diesem dichtend verschweißt, wobei das innere Rohrteil 1 eine im wesentlichen kreisförmige Öffnung 11 einer Stirnwand 12 des Anschlussglieds 9 durchragt und mit dem Rand der Öffnung dichtend verschweißt ist. Auf den die Stirnwand 12 durchragenden Teil des inneren Rohrteils 1 kann auf einfache Weise ein abgasführendes Rohr aufgeschweißt oder über Dichtmittel festgelegt sein.

In Fig. 1 ist lediglich einer von zwei endseitigen Anschlussbereichen des Gaskühlers gezeigt. Der Gaskühler kann grundsätzlich bezüglich seiner endseitigen Anschlüsse symmetrisch ausgebildet sein.

Die Erfindung funktioniert wie folgt:
Das den Kanal 3 durchströmende heiße Gas hat einen relativ große Berührfläche mit den Oberflächen der Wand 4 und den Fortsätzen 5 des inneren Rohrteils 1. Hierdurch wird Wärmeenergie des Gases auf das Metall des Rohrteils 1 übertragen. Die Kühlflüssigkeit durchströmt einen Zwischenraum 13, der zwischen der Wand 4 des inneren Rohrteils und der zylindrischen Wand des äußeren Rohrteils und gegebenenfalls den Stegen 7 verbleibt. Hierdurch wird die Wärme aus dem Material des inneren Rohrteils 1 auf die durchströmende Kühlflüssigkeit übertragen und letztlich die Wärme des Abgases über die Kühlflüssigkeit abgeführt. Die drei Stege 7, die sich ähnlich wie die Fortsätze 5 rippenartig über die gesamte Länge des äußeren Rohrteils 2 erstrecken, bilden über ihre Berührstellen mit dem inneren Rohrteil 1, die auch materialeinheitlich einstückig ausgeführt sein könnten, nur eine kleine und vernachlässigbare Wärmebrücke zwischen den Rohrteilen 1, 2. Um die Wärmebrücke weiter zu verkleinern, können die Stege im Bereich ihrer Anlage eine Verjüngung aufweisen.
Für eine gute Korrosionsbeständigkeit und hohe Wärmeleitfähigkeit bei guter Fertigbarkeit sind die Wände 4 und die Stege 5 zwischen 0.3mm und 2 mm insbesondere zwischen 0.5mm und 1.0 mm wählbar.

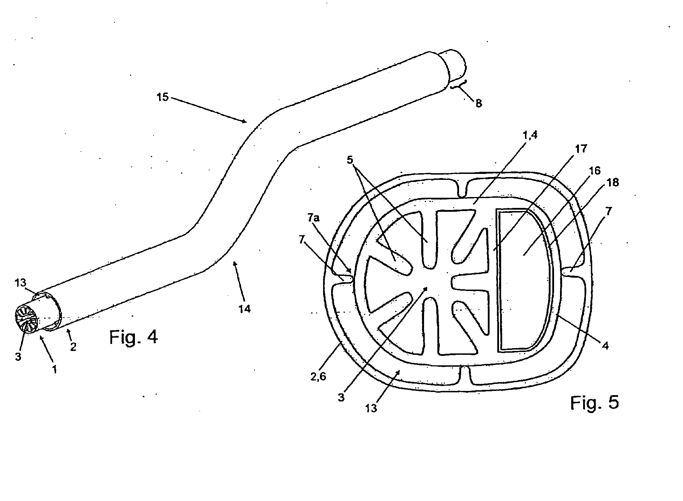

Fig. 4 zeigt die Rohrteile 1, 2 des Gaskühlers über ihre gesamte Länge. Dabei sind zwei Biegungen 14, 15 relativ zu der Längsachse der Rohrteile 1, 2 in die Rohrteile eingebracht. Über diese Biegungen 14, 15 kann der Gaskühler an den zur Verfügung stehenden Bauraum angepasst werden, ohne dass sich für den Gasstrom und/oder den Flüssigkeitsstrom wesentliche Beeint-rächtigungen ergeben. Im Zuge der Herstellung werden die beiden Rohrteile 1, 2 zunächst ineinander geschoben und ggf. in ihrer Position bezüglich ihrer Längsrichtung fixiert. Nachfolgend werden die Biegungen 14, 15 eingebracht, wodurch die Rohrteile 1, 2 zugleich formschlüssig aneinander festgelegt werden, so dass sich ggf. weitere Schritte wie ein Verschweißen der Rohrteile aneinander erübrigen. Für eine gute Korrosionsbeständigkeit und hohe Wärmeleitfähigkeit bei guter Fertigbarkeit sind die Wände 4 und die Stege 5zwischen 0.3mm und 2 mm insbesondere zwischen 0.5mm und 1.0 mm wählbar.

Fig. 5 zeigt ein zweites Ausführungsbeispiel des Gaskühlers, bei dem funktionsgleiche Bauteile mit den gleichen Bezugszeichen wie im ersten Ausführungsbeispiel versehen sind.

Im Unterschied zum ersten Ausführungsbeispiel sind inneres Rohrteil 1 und äußeres Rohrteil 2 nicht von zylindrischem Außenumfang, sondern haben einen verrundeten gestreckten Querschnitt. Das innere Rohrteil 1 hat einen zusätzlichen Bypasskanal 16, der benachbart des Gaskanals 3 angeordnet ist. Die Kanäle 3, 16 werden von einer gemeinsamen Außenwandung 4 umfangen, wobei zwischen dem Gaskanal 3 und dem Bypasskanal 16 eine Trennwand 17 angeordnet ist.

Im Gegensatz zu dem Kanal 3 mit seinen Fortsätzen 5 hat der Bypasskanal 16 keine Fortsätze, so dass er bei gleichem Strömungswiderstand eine deutlich kleinere Oberfläche und somit Wärmeaustauschfläche bezüglich des durchströmenden Gases aufweist. Zusätzlich ist der Bypasskanal 16 mit einem Blech 18 verkleidet, das, insbesondere über einen Luftspalt zwischen der Wandung 17 und dem Blech 18, eine zusätzliche Wärmeisolation bewirkt. Über nicht dargestellte, an sich aus dem Bau von Abgaskühlern jedoch bekannte Klappen oder Ventilmittel kann der Abgasstrom z. B. im Falle eines Kaltstarts des Motors zunächst durch den Bypasskanal 16 geleitet werden, in dem er keine nennenswerte Abkühlung erfährt. Erst bei betriebswarmem Motor ist eine Kühlung des rückgeführten Abgases gewünscht und erforderlich, wozu der Gasstrom dann durch den Strömungskanal 3 geleitet wird.

In dem zweiten Ausführungsbeispiel haben die vorliegend vier Stege 7, die sich von der Außenwand 6 des äußeren Rohrteils 2 bis zu der äußeren Oberfläche des inneren Rohrteils 1 erstrecken, jeweils ein verrundetes Ende 7a. Das verrundete bzw. verjüngte Ende 7a bewirkt eine relativ kleine Berührfläche der Stege 7 mit der Wandung 4, so dass der Wärmeübergang zwischen dem inneren Rohrteil 1 und dem äußeren Rohrteil 2 sehr klein ist und annähernd die gesamte Oberfläche des inneren Rohrteils 1 von dem Kühlmittel umströmt wird.

Für eine gute Korrosionsbeständigkeit und hohe Wärmeleitfähigkeit bei guter Fertigbarkeit sind die Wände 4 und die Stege 5 zwischen 0.3mm und 2 mm insbesondere zwischen 0.5mm und 1.0 mm wählbar.

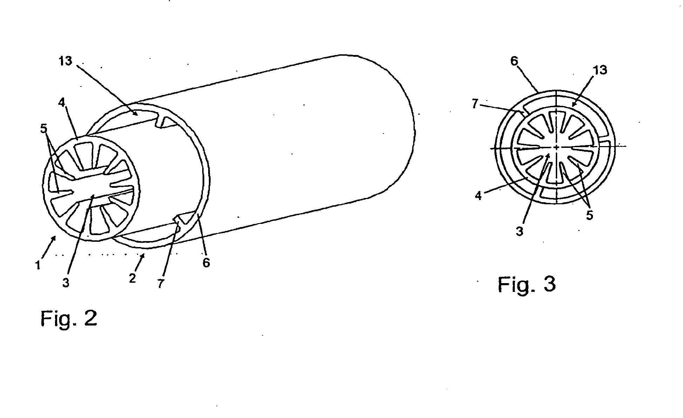

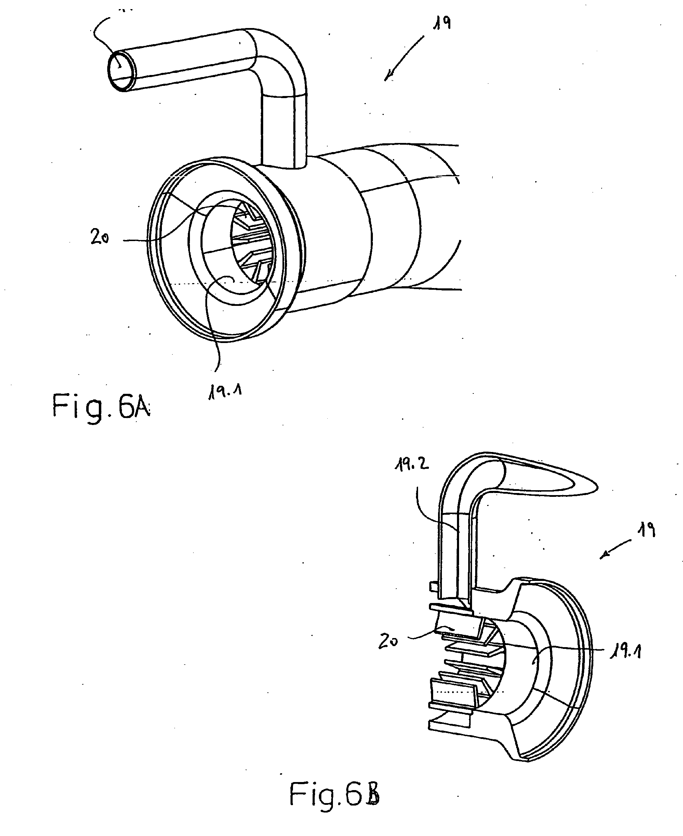

In Fig. 6A und Fig. 6B ist eine weitere vorteilhafte Ausführungsform für einen kühlmittelseitigen und/oder gasseitigen Anschluss an einen Wärmetauscher, z.B. den Kühler der Fig. 1 bis Fig. 5 dargestellt. Hierbei erfolgt der gas- und kühlmittelseitig Anschluss über nur ein Abschlusselement 19, welches die Zuströmung beider Fluide beinhaltet. Die Anströmung und der Anschluss 19.1 des zu kühlenden Fluids erfolgt hierbei in Längsrichtung des nicht weiter gezeigten Kühlers während der kühlmittelseitige Anschluss 19.2 radial zur Gasströmungsrichtung angeordnet ist. Die dargestellte Ausführung eines Anschlusselements 19 ist insbesondere eine Erweiterung der bereits in Fig. 1 gezeigten Ausführung eines Anschlussteils mit Anschlüssen 9, 10. Der gasseitige Anschluss 19.1 ist hierbei vorteilhaft als sogenannte V-Schelle ausgeführt. Die Stege 20 entsprechen im Wesentlichen den Stegen 5 zur verbesserten Wärmeübertragung.

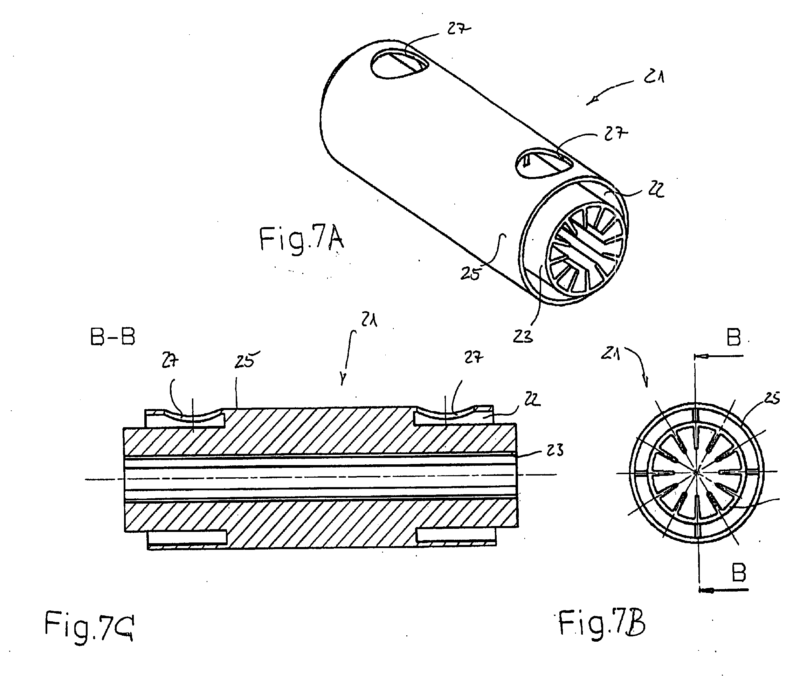

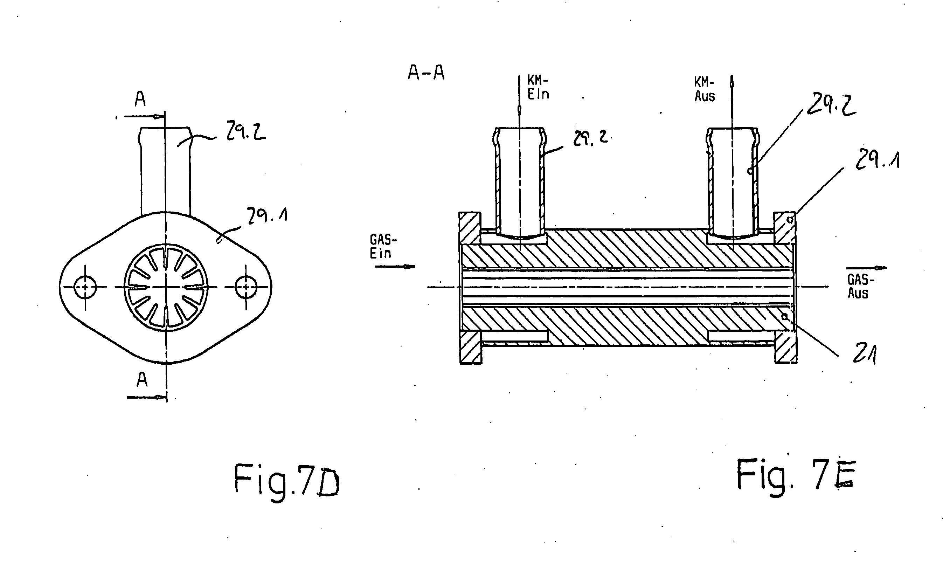

In den Fig. 7D, Fig. 7E ist noch eine weitere vorteilhafte Ausführungsform für einen kühlmittelseitigen Anschluss 29.2 und gasseitigen Anschluss 29.1 an eine Rohranordnung 21 der Fig. 7A bis Fig. 7C dargestellt. Im Endbereich 22 der Rohranordnung 21 werden Zwischenstege zwischen dem inneren Rohr 23 und dem äußeren Rohr 25 entfernt, so dass sich ein Verteilkanal für das Kühlmittel ergibt. In das äußere Rohr 25 werden im zwischenstegsfreien Bereich 22 zusätzliche Bohrungen 27 für die Kühlmittelanschlüsse 29.2 eingebracht, in welchen selbige mittels Schweißen, Löten, Kleben oder Einpressen befestigt werden. Der gasseitige Anschluss 29.1 wird über einen einfachen Flansch realisiert. Dieser kann entweder stumpf auf das Ende des inneren Rohres 23 aufgesetzt werden, so dass der Fluidbereich des äußeren Rohres 25 abdeckt ist. Oder es kann ein Teil des äußeren Rohres 25 entfernt werden und der Flansch dann über das freigelegte innere Rohr 23 geschoben und dort positioniert werden. Eine Befestigung des Flansches erfolgt wiederum mittels Schweißen, Löten, Kleben oder Einpressen.

Alternativ sind auch Flanschanschlüsse möglich, welche sowohl den Gasseitigen wie auch Kühlmittelseitigen Anschluss beinhalten. Ferner ist in einer weiteren Ausführung vorgesehen, dass der Flanschanschluss derart ausgebildet ist, dass sowohl das zu kühlende Fluid, insbesondere das Gas wie das Abgas, als auch das Kühlmittel durch den gemeinsamen Flanschanschluss in den Wärmetauscher einströmen.

Die in den Zeichnungen Fig. 7A bis Fig. 7E offenbarte Darstellung des gasund kühlmittelseitigen Anschlusses hebt sich, insbesondere von der in der Gebrauchsmusterschrift DE 203 01 920 U1 angemeldeten Kühlerausführung dahingehend ab, dass nicht der kühlmittelseitige und der gasseitige Anschluss 29.1, 29.2 gemeinsam in den komplex ausgebildeten Rohrabschlussstücken eingebracht sind, sondern wie oben beschrieben auf praktische und einfach sowie kostengünstig herzustellende Weise, der Kühlmittelanschluss direkt im Außenrohr 25 und der Gasanschluss nur im vorderen Bereich des Innenrohrs 23 angebracht ist.

## Patentansprüche

1. Abgaskühler zur Kühlung eines Abgases für einen Verbrennungsmotor eines Kraftfahrzeugs und/oder Schienenfahrzeugs, aufweisend:
ein inneres Rohrteil (1) mit zumindest einem Kanal (3) und ein äußeres Rohrteil (2), wobei
an zumindest einem von beiden, innerem Rohrteil (1) oder äußerem Rohrteil (2), ein Steg (7) angeordnet ist, wobei sich der Steg (7) bis zu dem jeweils anderen der beiden, inneres Rohrteil (1) oder äußeres Rohrteil (2), erstreckt, und
das innere Rohrteil zumindest einen Kanal (3) zur Führung des zu kühlenden Abgases aufweist und
das innere Rohrteil (1) auf Basis von Aluminium ausgebildet ist und das äußere Rohrteil (2), auf Basis von Kunststoff ausgebildet ist, wobei
das innere Rohrteil (1) eine Mehrzahl von rippenartigen Fortsätzen (5) aufweist, die in den Kanal (3) hineinragen.

2. Abgaskühler nach einem der vorhergehenden Ansprüche, **dadurch gekennzeichnet, dass**
zumindest eines der beiden Rohrteile (1, 2), vorzugsweise das innere Rohrteil (1), als Strangpressprofil ausgebildet ist.

3. Abgaskühler nach einem der vorhergehenden Ansprüche,
**dadurch gekennzeichnet, dass**
zumindest eines von beiden, inneres Rohrteil (1) oder äußeres Rohrteil (2), über seinen Verlauf eine Verdrehung um eine Längsrichtung aufweist.

4. Abgaskühler nach einem der vorhergehenden Ansprüche,
**dadurch gekennzeichnet, dass**
das innere Rohrteil (1) und das äußere Rohrteil (2) über ihren Verlauf zumindest eine Biegung (14, 15) aufweisen.

5. Abgaskülher nach einem der vorhergehenden Ansprüche,
**dadurch gekennzeichnet, dass** das
innere Rohrteil (1) einen Überstand (8) in einer Längsrichtung über das äußere Rohrteil (2) aufweist.

6. Abgaskühler nach einem der vorhergehenden Ansprüche,
**dadurch gekennzeichnet, dass**
das innere Rohrteil (1) und das äußere Rohrteil (2) als separate Teile ausgeformt sind, wobei ein Einschieben des inneren Rohrteils (1) in das äußere Rohrteil (2) durch den Steg (7) zwangsgeführt ist, vorzugsweise der Steg aus Kunststoff gebildet ist.

7. Abgaskühler nach einem der vorhergehenden Ansprüche,
**dadurch gekennzeichnet, dass**
ein Innenraum des inneren Rohrteils (1), ein zentraler Innenraum, einen im wesentlichen kreis- oder ellipsenförmigen, insbesondere runden Querschnitt aufweist.

8. Abgaskühler nach einem der vorhergehenden Ansprüche,
**dadurch gekennzeichnet, dass**
ein Innenraum des inneren Rohrteils (1) einen Querschnitt aufweist, der wenigstens einen sich am zentralen Innenraum anschließende radialen Ausläufer aufweist, einen vom äußeren Rohrteil (2) umfänglich begrenzten radialen Ausläufer.

9. Abgaskühler nach einem der vorhergehenden Ansprüche,
**dadurch gekennzeichnet, dass**
in den Zwischenraum zwischen dem äußeren Rohrteil (1) und dem inneren Rohrteil (2) ein Steg mit einem freien Ende ragt.

10. Abgasrückführsystem für einen Verbrennungsmotor mit einer Verbrennungsluftzuführleitung zur Zuführung von Verbrennungsluft zu einem Einlass des Verbrennungsmotors, einer Abgasleitung zur Abfuhr von Abgas von einem Auslass des Verbrennungsmotors und einer Abgasrückführleitung zur Rückführung von Abgas aus der Abgasleitung in die Verbrennungsluftzuführleitung,
**dadurch gekennzeichnet, dass**
in der Abgasleitung und/oder in der Abgasrückführleitung ein Abgaskühler zur Kühlung das Abgases angeordnet ist, welcher nach einem der vorhergehenden Ansprüche ausgebildet ist.

## Claims

1. An exhaust gas cooler for cooling an exhaust gas for an internal combustion engine, of a motor vehicle and/or rail vehicle, said exhaust gas cooler having:
an inner tube part (1) with at least one channel (3) and an outer tube part (2), wherein
a web (7) is arranged on at least one of the inner tube part (1) or outer tube part (2), wherein the web (7) extends as far as the other of the inner tube part (1) or outer tube part (2), and
the inner tube part has at least one channel (3) for conveying the exhaust gas to be cooled, and
the inner tube part (1) is formed on the basis of aluminium and the outer tube part (2) is formed on the basis of plastics material, wherein
the inner tube part (1) has a plurality of rib-like extensions (5), which project into the channel (3).

2. The exhaust gas cooler according to one of the preceding claims **characterized in that** at least one of the two tube parts (1, 2), preferably the inner tube part (1), is formed as an extruded profile.

3. The exhaust gas cooler according to one of the preceding claims, **characterized in that** at least one of the inner tube part (1) or outer tube part (2), over the extent thereof, has a twist around a longitudinal direction.

4. The exhaust gas cooler according to one of the preceding claims, **characterized in that** the inner tube part (1) and the outer tube part (2) have art least one bend (14, 15) over the extent thereof.

5. The exhaust gas cooler according to one of the preceding claims, **characterized in that** the inner tube part (1) has a projection (8) in a longitudinal direction beyond the outer tube part (2).

6. The exhaust gas cooler according to one of the preceding claims, **characterized in that** the inner tube part (1) and the outer tube part (2) are formed as separate parts, wherein insertion of the inner tube part (1) into the outer tube part (2) is forcibly guided by the web (7), the web preferably being formed from plastics material.

7. The exhaust gas cooler according to one of the preceding claims, **characterized in that** an interior space of the inner tube part (1), that is to say a central interior space, has a substantially circular or elliptical, in particular round, cross-section.

8. The exhaust gas cooler according to one of the preceding claims, **characterized in that** an interior space of the inner tube part (1) has a cross-section which has at least one radial extension adjacent to the central interior space, the radial extension being defined peripherally by the outer tube part (2).

9. the exhaust gas cooler according to one of the preceding claims, **characterized in that** a web projects via end free end into the gap between the outer tube part (1) and the inner tube part (2).

10. An exhaust gas recirculation system for an internal combustion engine, with a combustion air feed line for feeding combustion air to an inlet of the internal combustion engine, an exhaust gas line for removing exhaust gas from an outlet of the internal combustion engine, and an exhaust gas recirculation line for recirculating exhaust gas from the exhaust gas line into the combustion air feed line, **characterized in that** an exhaust gas cooler for cooling the exhaust gas is arranged in the exhaust gas line and/or in the exhaust gas recirculation line and is formed in accordance with one of the preceding claims.

## Revendications

1. Refroidisseur de gaz d'échappement servant au refroidissement d'un gaz d'échappement pour un moteur à combustion interne d'un véhicule automobile et / ou d'un véhicule sur rails, présentant :
une partie tubulaire intérieure (1) comportant au moins un conduit (3), et une partie tubulaire extérieure (2), où une barrette (7) est disposée sur au moins l'une des deux parties tubulaires, à savoir la partie tubulaire intérieure (1) ou la partie tubulaire extérieure (2), où la barrette (7) s'étend à chaque fois jusqu'à l'une ou l'autre des deux parties tubulaires, à savoir la partie tubulaire intérieure (1) ou la partie tubulaire extérieure (2), et la partie tubulaire intérieure présente au moins un conduit (3) servant au guidage du gaz d'échappement à refroidir et la partie tubulaire intérieure (1) est conçue à base d'aluminium, la partie tubulaire extérieure (2) étant conçue à base de matière plastiqué, où la partie tubulaire intérieure (1) présente une pluralité d'extensions (5) en forme d'ailettes qui pénètrent dans le conduit (3).

2. Refroidisseur de gaz d'échappement selon l'une ou l'autre des revendications précédentes, **caractérisé en ce qu'**au moins l'une des deux parties tubulaires (1, 2), de préférence la partie tubulaire intérieure (1), est conçue comme un profilé extrudé.

3. Refroidisseur de gaz d'échappement selon l'une ou l'autre des revendications précédentes, **caractérisé en ce qu'**au moins l'une des deux parties tubulaires, à savoir la partie tubulaire intérieure (1) ou la partie tubulaire extérieure (2), présente, sur son tracé, une torsion autour d'une direction longitudinale.

4. Refroidisseur de gaz d'échappement selon l'une quelconque des revendications précédentes, **caractérisé en ce que** la partie tubulaire intérieure (1) et la partie tubulaire extérieure (2) présentent, sur leur tracé, au moins une courbure (14, 15).

5. Refroidisseur de gaz d'échappement selon l'une quelconque des revendications précédentes, **caractérisé en ce que** la partie tubulaire intérieure (1) présente une partie saillants (8) qui dépasse de la partie tubulaire extérieure (2), dans une direction longitudinale.

6. Refroidisseur de gaz d'échappement selon l'une quelconque des revendications précédentes, **caractérisé en ce que** la partie tubulaire intérieure (1) et la partie tubulaire extérieure (2) sont formées comme des partie séparées, où une introduction de la partie tubulaire intérieure (1), dans la partie tubulaire extérieure (2), est guidée de maçon forcée par la barrette (7), la barrette étant de préférence en matière plastique.

7. Refroidisseur de gaz d'échappement selon l'une quelconque des revendications précédentes, **caractérisé en ce qu'**un espace intérieur de la partie tubulaire intérieure (1) présente un espace intérieur central, une section sensiblement en forme de cercle ou d'ellipse, en particulier de forme ronde.

8. Refroidisseur de gaz d'échappement selon l'une quelconque des revendications précédentes, **caractérisé en ce qu'**un espace intérieur de la partie tubulaire intérieure (1) présente une section qui comporte au moins une saillie radiale qui fait suite à l'espace intérieur central, une saillie radiale limitée circonférentiellement par la partie tubulaire extérieure (2).

9. Refroidisseur de gaz d'échappement selon l'une quelconque des revendications précédentes, **caractérisé en ce qu'**une barrette comportant une extrémité libre émerge dans l'espace intermédiaire formé entré la partie tubulaire extérieure (2) et la partie tubulaire intérieure (1).

10. Système de recyclage des gaz d'échappement pour un moteur à combustion interne comprenant une conduite d'alimentation en air de combustion servant à l'alimentation en air de combustion jusqu'à une entrée du moteur à combustion interne, comprenant une conduite de gaz d'échappement servant à l'évacuation de gaz d'échappement depuis une sortie du moteur à combustion interne, et comprenant une conduite de recyclage des gaz d'échappement servant au recyclage de gaz d'échappement provenant de la conduite de gaz d'échappement et passant dans la conduite d'alimentation en air de combustion, **caractérisé en ce qu'**un refroidisseur de gaz d'échappement servant au refroidissement du gaz d'échappement est disposé dans la conduite de gaz d'échappement et / ou dans la conduite de recyclage de gaz d'échappement, lequel refroidisseur de gaz d'échappement est conçu selon l'une quelconque des revendications précédentes.
